# EUROPEAN PATENT APPLICATION

(11) **EP 2 838 212 A1**
(43) Date of publication of application: **18.02.2015**
(21) Application number: 13306147.3
(22) Date of filing: 12.08.2013
(51) Int. Cl.: H04B 17/00

(54) **Multi-band multi-carrier testing method and apparatus**

(71) Applicant: ALCATEL LUCENT, 92100 Boulogne-Billancourt (FR)
(72) Inventor: Ng, Man Hung, Swindon, GB WI SN5 7DJ (GB); Wong, James, Swindon, GB WI SN5 7DJ (GB); Bitzer, Thomas, 70435 Stuttgart (DE)
(74) Representative: Lück, Stephan

(57) **Abstract**

The present invention relates to a method and apparatus for multi-band multi-carrier testing. A first multi-carrier signal in a lower band of the maximum radio bandwidth of the transmitter is used. The first multi-carrier signal has a narrowband carrier at the lower edge of the lower band and a wideband carrier at the higher edge of the lower band. Further, a second multi-carrier signal in a higher band of the maximum radio bandwidth or the transmitter is used. The second multi-carrier signal has a wideband carrier at the lower edge of the higher band and a narrowband carrier at the higher edge of the higher band. The transmitter test is performed with the first multi-carrier signal and the second multi-carrier signal.

## Description

### FIELD OF THE INVENTION

The present invention relates to a method and apparatus for multi-band multi-carrier testing.

### BACKGROUND OF THE INVENTION

This section introduces aspects that may be helpful in facilitating a better understanding of the invention. Accordingly, the statements of this section are to be read in this light and are not to be understood as admission about what is in the prior art.

3GPP has been working to define in TS 37.141 frequency requirements for test configurations to be used for testing of multi-band multi-standard radio base station radio. This is to ensure that different devices of different manufacturers satisfy the same interface specifications. Purpose of the testing is to discover if a device satisfies all predefined requirements under predefined conditions.

For testing, each concerned band within the maximum radio bandwidth of a base station is considered as an independent band and corresponding test configurations are applied to each band independently. Therefore, for each band of the multi-band multi-standard radio base station, the same test configuration is applied and the corresponding signals are generated for testing.

In some asymmetric test configurations currently defined in TS 37.141, a narrowband carrier (GSM or narrowband E-UTRA) is positioned at the lower edge of a band and a wideband carrier (UTRA or wideband E-UTRA) is positioned at the higher edge of a band. These asymmetric test configurations are replicated for each band under test. Thus, regarding the radio frequency bandwidth of a base station, a narrowband carrier is positioned at the lower edge of the radio frequency bandwidth of the base station and a wideband carrier (UTRA or wideband E-UTRA) is positioned at the higher edge of the radio frequency bandwidth of the base station.

### SUMMARY OF THE INVENTION

It is an object of the invention to improve the above mentioned test configurations.

According to one embodiment, a method for testing a transmitter is proposed. A first multi-carrier signal in a lower band of the maximum radio bandwidth of the transmitter is received. The first multi-carrier signal has a narrowband carrier at the lower edge of the lower band and a wideband carrier at the higher edge of the lower band. Further, a second multi-carrier signal in a higher band of the maximum radio bandwidth of the transmitter is received. The second multi-carrier signal has a wideband carrier at the lower edge of the higher band and a narrowband carrier at the higher edge of the higher band. A transmitter test is performed using the received first multi-carrier signal and the received second multi-carrier signal. Thus, the first multi-carrier signal and the second multi-carrier signal are mirrored signals with regard to the position of the wideband carrier and the narrowband carrier within the frequency band. The carrier which is positioned at the lower edge of the band in the first multi-carrier signal is positioned at the higher edge of the band of the second multi-carrier signal and vice versa. This does not mean that the first multi-carrier signal and the second multi-carrier signal are mirrored signals regarding the spectrum of the two signals. For example, in one embodiment, the spectrum of the narrowband carrier in the first multi-carrier signal and in the second multi-carrier signal is identical. In a further embodiment, the spectrum of the narrowband carrier in the first multi-carrier signal and in the second multi-carrier signal is mirrored. In a further embodiment, the spectrum of the narrowband carrier in the first multi-carrier signal is different to the spectrum of the narrowband carrier in the second multi-carrier signal. Same is true for the spectrum of the wideband carrier signal of the first multi-carrier signal and the second multi-carrier signal. The signals described above are for the lower band and for the higher band of the maximum radio bandwidth. When using the term lower band and higher band, a band at the lowest and highest edge of the maximum radio bandwidth is addressed. On the other hand, lower and higher band may also describe a band close to the edges of the radio frequency bandwidth, e.g. second or third lowest or highest band of the radio frequency bandwidth. In many test configurations, all bands or most bands are tested. Thus, for testing the intermediate bands, same multi-carrier test signals are used. In one embodiment, for the lower half of all bands, the first multi-carrier signal is used. In the upper half of all bands, the second multi-carrier signal is used. In another embodiment, in all band except the highest band, the first multi-carrier signal is used and in the highest band, the second multi-carrier test signal is used. The proposed method has the advantage that with regard to the maximum radio bandwidth of the transmitter, for test purposes at the lower edge and at the higher edge of the maximum radio bandwidth of the transmitter a narrowband carrier is positioned. Therefore, the proposed test configuration is demanding and meaningful.

In one embodiment, the transmitter under test is a transmitter of a multi-band multi-standard base station.

In one embodiment, the narrowband carrier is a GSM carrier or a narrowband E-UTRA carrier and the wideband carrier is a UTRA or wideband E-UTRA carrier.

In one embodiment, the first multi-carrier signal and the second multi-carrier signal are overlaid by an interfering signal. Overlaid by an interfering signal in this content means that a separate signal source provides the interfering signal, which disturbs the signal source of the transmitter when generating the first multi-carrier signal and the second multi-carrier signal and causing intermodulation.

In one embodiment, the performed transmitter test is at least one of a base station output power test, transmitter ON/OFF power test, modulation quality test, transmitter spurious emissions test, operating band unwanted emissions test and transmitter intermodulation test.

In one embodiment, the transmitter under test is part of a base station comprising at least one transmitter and at least one receiver. The transmitter generates the first multi-carrier signal and the second multi-carrier signal. The transmitter port of the base station is terminated and spurious emissions of the first multi-carrier signal and the second multi-carrier signal are emitted by the receiver port. These spurious emissions are measured for the transmitter test.

According to one embodiment, a method for testing a receiver is proposed. A first multi-carrier signal in a lower band of the maximum radio bandwidth of the receiver is received. The first multi-carrier signal has a narrowband carrier at the lower edge of the lower band and a wideband carrier at the higher edge of the lower band. The first multi-carrier signal being overlaid by an interfering signal by using e.g. a coupler, circulator or hybrid. A second multi-carrier signal in a higher band of the maximum radio bandwidth of the receiver is received. The second multi-carrier signal has a wideband carrier at the lower edge of the higher band and a narrowband carrier at the higher edge of the higher band. The second multi-carrier signal being overlaid by an interfering signal by using e.g. a coupler, circulator or hybrid. A receiver test is performed using the received first multi-carrier signal and the received second multi-carrier signal. In one embodiment, the performed receiver test is a receiver blocking characteristics test. The proposed method has the advantage that with regard to the maximum radio bandwidth of the receiver, for test purposes at the lower edge and at the higher edge of the maximum radio bandwidth of the receiver a narrowband carrier is positioned. Therefore, the proposed test configuration is demanding and meaningful.

In one embodiment, the interfering signal which is overlaid to the first multi-carrier signal and the second multi-carrier signal is composed of a combination of a continuous wave (CW) interfering signal and a modulated interfering signal. In one embodiment, the performed receiver test receiver intermodulation test.

According to one embodiment, an apparatus for generating a receiver testing signal is proposed. The apparatus comprise a first signal generator for generating a first multi-carrier signal in a lower band of the maximum radio bandwidth of the receiver. The first multi-carrier signal has a narrowband carrier at the lower edge of the lower band and a wideband carrier at the higher edge of the lower band. The first signal generator is further for generating a second multi-carrier signal in a higher band of the maximum radio bandwidth of the receiver. The second multi-carrier signal has a wideband carrier at the lower edge of the higher band and a narrowband carrier at the higher edge of the higher band. Further, the apparatus comprises a second signal generator for generating an interfering signal. A first coupler for coupling the signals of the first signal generator and the second signal generator is provided.

In one embodiment, the second signal generator for generating an interfering signal comprises a third signal generator for generating a continuous wave (CW) interfering signal and a fourth signal generator for generating a modulated interfering signal. Further, a second coupler for coupling the signals of the third signal generator and the fourth signal generator is provided.

According to one embodiment, a system for performing a transmitter test is proposed. The system at least comprises a transmitter. The transmitter comprises a signal generator for generating a first multi-carrier signal in a lower band of the maximum radio bandwidth of the transmitter. The first multi-carrier signal has a narrowband carrier at the lower edge of the lower band and a wideband carrier at the higher edge of the lower band. The signal generator is further for generating a second multi-carrier signal in a higher band of the maximum radio bandwidth of the transmitter. The second multi-carrier signal has a wideband carrier at the lower edge of the higher band and a narrowband carrier at the higher edge of the higher band. Further, the system comprises test equipment comprising a receiver for receiving the first and second multi-carrier signals. Further, the system comprises a processor for performing a transmitter test with the received first multi-carrier signal and the received second multi-carrier signal.

According to one embodiment, the processor for performing a transmitter test performs at least one of a transmitter output power test, transmitter ON/OFF power test, modulation quality test, transmitter spurious emissions test, operating band unwanted emissions test and transmitter intermodulation test.

According to one embodiment, the transmitter of the system is the transmitter under test. This is e.g. a transmitter of a base station. The system further includes a termination module for terminating the transmitter output. Further, the receiver of the test equipment is for receiving the first multi-carrier signal and the second multi-carrier signal emitted by a receiver output of the base station. The processor is for performing a receiver spurious emissions test of the base station. The spurious emissions of the transmitter signal, which are output at the receiver port, correspond to a significantly attenuated transmitter signal. Thus, the receiver of the system receives the first multi-carrier signal and the second multi-carrier signal, which are attenuated significantly. For the testing of the receiver spurious emissions, it is advantageous to use the signal distribution as described above in order to provide a meaningful spurious emissions test.

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: Carrier spectrum for multi-band multi-standard radio base station testing
- Fig. 2: Carrier spectrum for multi-band multi-standard radio base station testing according to the invention
- Fig. 3: Set-up for multi-band multi-standard radio base station output power, transmitter ON/OFF power, modulation quality, transmitter spurious emissions and operating band unwanted emission testing
- Fig. 4: Set-up for transmitter intermodulation testing
- Fig. 5: Set-up for receiver blocking characteristics testing
- Fig. 6: Set-up for receiver spurious emissions testing
- Fig. 7: Set-up for receiver intermodulation testing

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

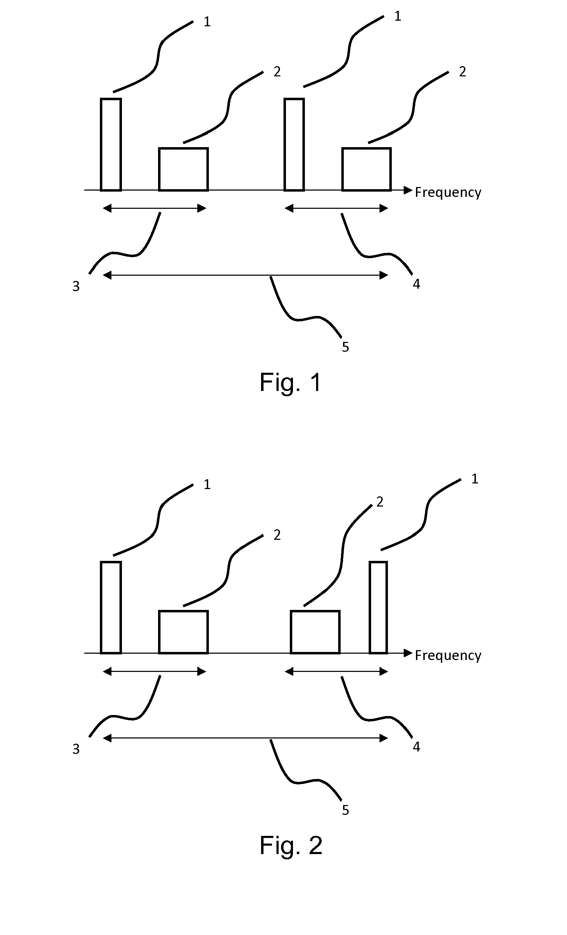

Fig. 1 shows an example of a multi-carrier signal used for multi-band multi-standard radio base station testing as known in the art. A multi-carrier test signal is used for band testing. The multi-carrier test signal includes a GSM carrier 1 at the lower edge of the band 3, 4 and an UTRA carrier 2 at the higher edge of the band 3, 4. Thus, at the lower edge of the band 3, 4 a narrowband carrier 1 is used and at the higher edge, a wideband carrier 2 is used. Also, other narrowband carrier 1 (e.g. narrowband E-UTRA) and wideband carrier 2 (e.g. wideband E-UTRA) may be used. For test purposes, the multi-carrier test signal is replicated and each band 3, 4 within the maximum radio bandwidth of the base station 10 is tested. If not each band 3, 4 is tested, at least some of the bands 3, 4 are tested with this signal. This includes in general also the highest band 4 of the maximum radio bandwidth 5 of the base station 10. Thus, a wideband carrier 2 (e.g. UTRA or wideband E-UTRA) is used at the higher edge of the higher band 4 and thus at the higher edge of the maximum radio bandwidth 5 of the base station 10.

According to 3 GPP TS 37.141, Fig. 1 shows a TC4a test configuration with two carriers 1, 2. This test configuration is dedicated to test multi-band operation with each supported band activated. For each supported band 3, 4 the existing test configuration is reused as much as possible. Two kinds of multi-band test configurations are proposed for multi-band testing. A first test configuration is generated by a larger number of carriers 1, 2 and shall be used for verification of transmit modulation quality and frequency error. A second test configuration is generated by a smaller number of carriers 1, 2 with higher PSD in each carrier 1, 2 and shall be used for verification of all requirements which need multi-band test except the tests which use the first test configuration.

Each concerned band is considered as an independent band and corresponding test configuration are applied for each band.

Fig. 2 discloses a multi-carrier test signal according to the invention. At the higher band 4, the frequency carriers 1, 2 of the lower band 3 are mirrored. At the higher band 4, the second multi-carrier signal used for test purposes comprises a wideband carrier 2 at the lower edge of the band 4 and a narrowband carrier 1 at the higher edge of the band 4. This leads to a demanding and meaningful test, as the narrowband carrier 1 is positioned at both edges of the maximum radio bandwidth 5. In the intermediate bands, which means not the highest band 4 and not the lowest band 3 under test of the maximum radio bandwidth 5 of the base station 10, either a first multi-carrier signal having a narrowband carrier 1 at the lower edge of the band and a wideband carrier 2 at the higher edge of the band or a second multi-carrier signal having a wideband carrier 2 at the lower edge of the band and a narrowband carrier 1 at the higher edge of the band may be used.

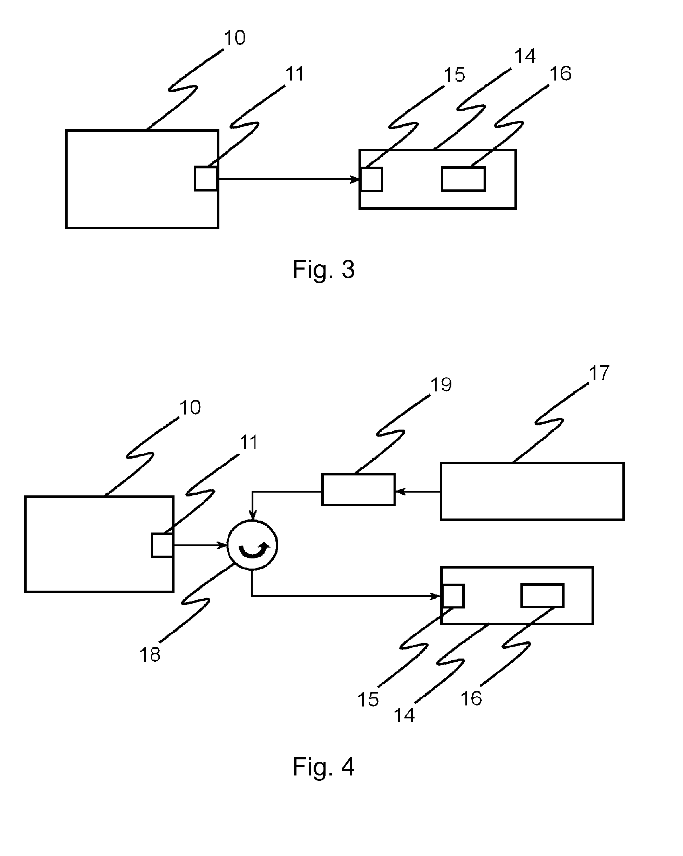

Fig. 3 depicts a measurement set-up for multi-band multi-standard radio base station output power, transmitter ON/OFF power, modulation quality, transmitter spurious emissions and operating band unwanted emission testing. The base station 10 under test comprises a transmitter 11. The transmitter 11 is for generating at least a first multi-carrier signal having a narrowband carrier 1 at the lower edge of the band 3 and a wideband carrier 2 at the higher edge of the band 3 and a second multi-carrier signal having a wideband carrier 2 at the lower edge of the band 4 and a narrowband carrier 1 at the higher edge of the band 4. The first multi-carrier signal is at a lower band 3 of the maximum radio bandwidth 5 of the transmitter 11 and the second multi-carrier signal is at a higher band 4 of the maximum radio bandwidth 5 of the transmitter 11. The transmitter 11 output is connected to a measurement equipment 14 comprising at least a receiver 15 and a testing unit 16 for performing a transmitter test. The testing unit 16 performs at least one of a output power, transmitter ON/OFF power, modulation quality, transmitter spurious emissions and operating band unwanted emission test using the data received by the receiver 15.

Fig. 4 depicts a measurement set-up for transmitter intermodulation testing. The base station 10 under test comprises a transmitter 11. The transmitter 11 is for generating at least a first multi-carrier signal having a narrowband carrier 1 at the lower edge of the band 3 and a wideband carrier 2 at the higher edge of the band 3 and a second multi-carrier signal having a wideband carrier 2 at the lower edge of the band 4 and a narrowband carrier 1 at the higher edge of the band 4. The first multi-carrier signal is at a lower band 3 of the maximum radio bandwidth 5 of the transmitter 11 and the second multi-carrier signal is at a higher band 4 of the maximum radio bandwidth 5 of the transmitter 11. The transmitter 11 of the base station 10 is disturbed by an external interfering signal generated by a signal generator 17 and connected to the transmitter 11 by a circulator 18. An attenuator 19 is connected between the signal generator 17 for generating the interfering signal and the circulator 18. The output signal of the transmitter 11 is provided to the measurement equipment 14 comprising at least a receiver 15 and a testing unit 16 for performing a transmitter test. The testing unit 16 performs a transmitter intermodulation test.

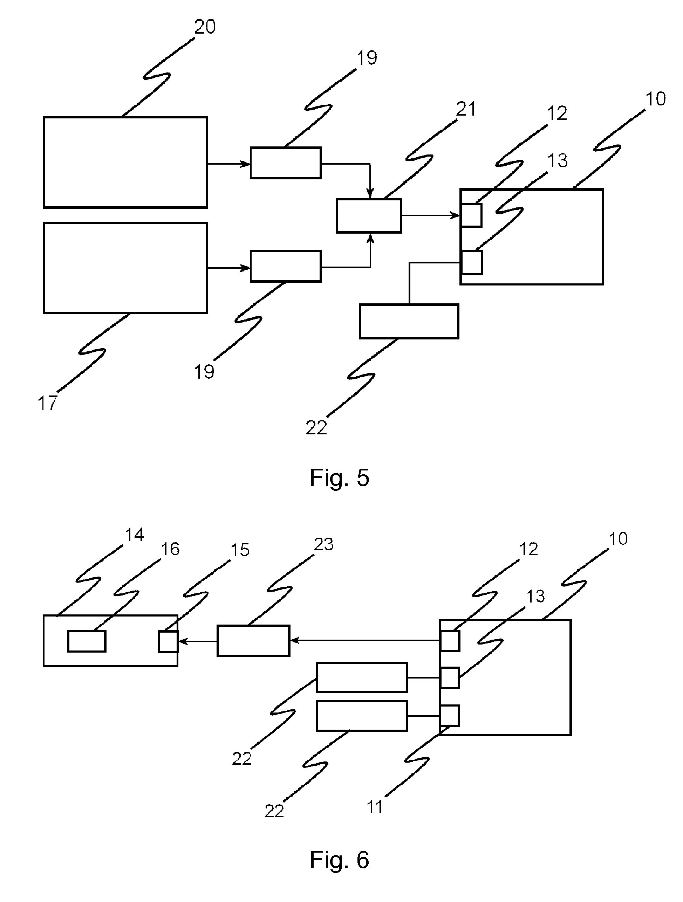

Fig. 5 depicts a measurement set-up for receiver blocking characteristics testing. The base station 10 under test includes at least one receiver 12 to be tested. The receiver 12 is for receiving at least a first multi-carrier signal having a narrowband carrier 1 at the lower edge of the band 3 and a wideband carrier 2 at the higher edge of the band 3 and a second multi-carrier signal having a wideband carrier 2 at the lower edge of the band 4 and a narrowband carrier 1 at the higher edge of the band 4. The first multi-carrier signal is at a lower band 3 of the maximum radio bandwidth 5 of the receiver 12 and the second multi-carrier signal is at a higher band 4 of the maximum radio bandwidth 5 of the receiver 12. Further receivers 13 of the base station 10 are connected to a termination module 22 so that they do not influence the measurement. The output signal of a signal generator 20 generating a wanted signal, which simulates a signal to be received by the receiver and the output signal of a signal generator 17 for an interfering signal, which simulates disturbing signals in the band and out of band are connected by attenuators 19 to a hybrid 21. The output signal of the hybrid 21 composed of the output signals of both signal generators 17, 20 is connected to the receiver 12 under test.

Fig. 6 depicts a measurement set-up for receiver spurious emissions testing. The base station 10 under test comprises a transmitter 11. The transmitter 11 is for generating at least a first multi-carrier signal having a narrowband carrier 1 at the lower edge of the band 3 and a wideband carrier 2 at the higher edge of the band 3 and a second multi-carrier signal having a wideband carrier 2 at the lower edge of the band 4 and a narrowband carrier 1 at the higher edge of the band 4. The first multi-carrier signal is at a lower band 3 of the maximum radio bandwidth 5 of the transmitter 11 and the second multi-carrier signal is at a higher band 4 of the maximum radio bandwidth 5 of the transmitter 11. The transmitter output is connected to a termination module 22. Further, the base station 10 comprises a receiver 12, which is connected to a notch filter 23 for passing only the frequency band of the transmitter 11. The base station comprises further receivers 13 which are connected to a termination module 22 in order that they do not influence the measurement. The output of the notch filter 23 is connected to a measurement unit 14 comprising a receiver 15 and a testing unit 15 for performing a spurious emissions test.

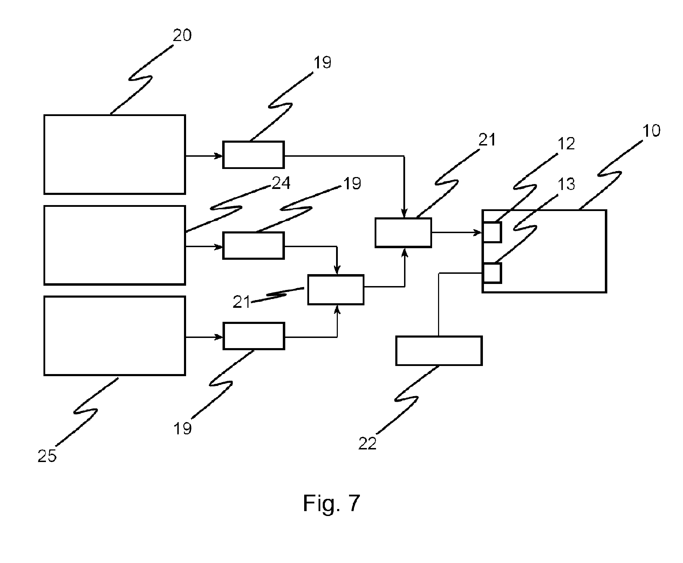

Fig. 7 depicts a measurement set-up for receiver intermodulation testing. The base station 10 under test includes at least one receiver 12 to be tested. The receiver 12 is for receiving at least a first multi-carrier signal having a narrowband carrier 1 at the lower edge of the band 3 and a wideband carrier 2 at the higher edge of the band 3 and a second multi-carrier signal having a wideband carrier 2 at the lower edge of the band 4 and a narrowband carrier 1 at the higher edge of the band 4. The first multi-carrier signal is at a lower band 3 of the maximum radio bandwidth 5 of the receiver 12 and the second multi-carrier signal is at a higher band 4 of the maximum radio bandwidth 5 of the receiver 12. Further receivers 13 of the base station 10 are connected to a termination module 22 so that they do not influence the measurement. The output signal of a signal generator 20 for a wanted signal simulating a signal to be received by the receiver is attenuated by an attenuator 19. The attenuated signal and a disturbing signal are connected to a hybrid 21. The output signal of the hybrid 21 is connected to the receiver 12 under test. For generating the disturbing signal, a signal generator 24 for a continuous wave (CW) interfering signal and a signal generator 25 for a modulated interfering signal are connected via attenuators 19 to a hybrid 21. The output of the hybrid 21 is the disturbing signal.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for testing a transmitter (11), comprising the steps of:
- receiving a first multi-carrier signal in a lower band (3) of the maximum radio bandwidth (5) of the transmitter (11), the first multi-carrier signal has a narrowband carrier (1) at the lower edge of the lower band (3) and a wideband carrier (2) at the higher edge of the lower band (3);
- receiving a second multi-carrier signal in a higher band (4) of the maximum radio bandwidth (5) of the transmitter (11), wherein the second multi-carrier signal has a wideband carrier (2) at the lower edge of the higher band (4) and a narrowband carrier (1) at the higher edge of the higher band (4), and
- performing a transmitter test using the received first multi-carrier signal and the received second multi-carrier signal.

2. Method for testing a transmitter (11) according to claim 1, wherein the transmitter (11) is a transmitter (11) of a multi-band-multi-standard base station (10).

3. Method for testing a transmitter (11) according to one of claims 1 to 2, wherein the narrowband carrier (1) is a GSM carrier or a narrowband E-UTRA carrier and the wideband carrier (2) is an UTRA carrier or wideband E-UTRA carrier.

4. Method for testing a transmitter (11) according to one of claims 1 to 3, wherein the first multi-carrier signal and the second multi-carrier signal are overlaid by an interfering signal.

5. Method for testing a transmitter (11) according to claim 1 or 4, wherein the performed transmitter test is at least one of a base station output power test, transmitter ON/OFF power test, modulation quality test, transmitter spurious emissions test, operating band unwanted emissions test and transmitter intermodulation test.

6. Method for testing a transmitter (11) according to claim 2 or 3, wherein the transmitter generates the first multi-carrier signal and the second multi-carrier signal, and the signals are emitted by at least one receiver port of a base station (10) when the transmitter ports are terminated, and receiver spurious emissions are measured by the transmitter test.

7. Method for testing a receiver (12), comprising the steps of:
- receiving a first multi-carrier signal in a lower band (3) of the maximum radio bandwidth (5) of the receiver (12), the first multi-carrier signal has a narrowband carrier (1) at the lower edge of the lower band (3) and a wideband carrier (2) at the higher edge of the lower band (3), the first multi-carrier signal being overlaid by an interfering signal;
- receiving a second multi-carrier signal in a higher band (4) of the maximum radio bandwidth (5) of the receiver (12), Wherein the second multi-carrier signal has a wideband carrier (2) at the lower edge of the higher band (4) and a narrowband carrier (1) at the higher edge of the higher band (4), the second multi-carrier signal being overlaid by an interfering signal, and
- performing a receiver test using the received first multi-carrier signal and the received second multi-carrier signal.

8. Method for testing a receiver (12) according to claim 6, wherein the performed receiver test is at least one of a blocking characteristics test and receiver intermodulation test.

9. Method for testing a receiver (12) according to one of claims 6 and 7, wherein the interfering signal is composed of a combination of a CW interfering signal and a modulated interfering signal.

10. Apparatus for generating a receiver testing signal, comprising:
- a first signal generator (20) for generating a first multi-carrier signal in a lower band (3) of the maximum radio bandwidth (5) of the receiver (12), the first multi-carrier signal has a narrowband carrier (1) at the lower edge of the lower band (3) and a wideband carrier (2) at the higher edge of the lower band (3); and for generating a second multi-carrier signal in a higher band (4) of the maximum radio bandwidth (5) of the receiver (12),
wherein the second multi-carrier signal has a wideband carrier (2) at the lower edge of the higher band (4) and a narrowband carrier (1) at the higher edge of the higher band (4),
- a second signal generator (17) for generating an interfering signal,
- a first coupler (21) for coupling the signals of the first signal generator (20) and the second signal generator (17).

11. Apparatus for generating a receiver testing signal according to claim 10, wherein the second signal generator (17) for generating an interfering signal comprises:
- a third signal generator (24) for generating a CW interfering signal and a fourth signal generator (25) for generating a modulated interfering signal, and
- a second coupler (21) for coupling the signals of the third signal generator (24) and the fourth signal generator (25).

12. System for performing a transmitter test, comprising:
- a transmitter (11) including a signal generator for generating a first multi-carrier signal in a lower band (3) of the maximum radio bandwidth (5) of the transmitter (11), the first multi-carrier signal has a narrowband carrier (1) at the lower edge of the lower band (3) and a wideband carrier (2) at the higher edge of the lower band (3); and for generating a second multi-carrier signal in a higher band (4) of the maximum radio bandwidth (5) of the transmitter (11),
wherein the second multi-carrier signal has a wideband carrier (2) at the lower edge of the higher band (4) and a narrowband carrier (1) at the higher edge of the higher band (4), and
- a test equipment (14) comprising a receiver (15) for receiving the first and second multi-carrier signals, and
- a processor (16) for performing a transmitter test using the received first multi-carrier signal and the received second multi-carrier signal.

13. System according to claim 12, wherein the processor (16) for performing a transmitter test performs at least one of a transmitter output power test, transmitter ON/OFF power test, modulation quality test, transmitter spurious emissions test, operating band unwanted emissions test and transmitter intermodulation test.

14. System according to claim 12, wherein the transmitter (11) is a transmitter (11) of a base station (10) and wherein the system further includes a termination module (22) for terminating the transmitter output and wherein the receiver (15) of the test equipment (14) is for receiving the first and second multi-carrier signal emitted by a receiver output of the base station (10) and the processor (16) is for performing a receiver spurious emissions test of the base station (10).
